(19) Europäisches Patentamt
European Patent Office
Office européen des brevets

(11) **EP 2 713 556 A1**

(12) **EUROPEAN PATENT APPLICATION**

(43) Date of publication:
**02.04.2014 Bulletin 2014/14**

(51) Int Cl.:
***H04L 12/24*** *(2006.01)*    ***H04L 12/70*** *(2013.01)*

(21) Application number: **12186582.8**

(22) Date of filing: **28.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NTT DoCoMo, Inc.**
**Chiyoda-ku**
**Tokyo 100-6150 (JP)**

(72) Inventors:
• **Khan, Ashiq**
  **80687 München (DE)**

• **Vaishnavi, Ishan**
  **80687 München (DE)**

(74) Representative: **Zimmermann, Tankred Klaus et al**
**Patentanwälte Schoppe, Zimmermann,**
**Stöckeler, Zinkler & Partner**
**Postfach 246**
**82043 Pullach bei München (DE)**

Remarks:
Amended claims in accordance with Rule 137(2) EPC.

(54) **Mapping a network topology request to a physical network**

(57)    A method for mapping a network topology request to a physical network is described. For each of a plurality of primary nodes (A, B) included in the network topology request a plurality of nodes in the physical network is determined that meet a primary resource requirement associated with the primary node, and from the nodes determined one or more node pairs connected in the physical network by a path are selected that meets a backup connection requirement for a connection between a primary node (A, B) and its backup node (A', B'). Then, the paths (134') in the physical network between node pairs (A-A', B-B') associated with interconnected primary nodes (A, B) are determined.

FIG 5A

FIG 5B

## Description

The present invention relates to the field of communication networks, more specifically to approaches for mapping a network topology request to a physical network, for example a physical network of a wired or wireless communication system.

In the field of communication networks virtual network operators are known. A virtual network operator may provide individual network solutions without the need of owning any network infrastructure. The virtual network operator arranges the individual network solution on the basis of the infrastructure and the technology of one or more telecommunication service providers. Virtual network operators are called "virtual" as they only offer network services without owing the physical data lines. Virtual network operators are active both in the field of wired communication networks and the field of wireless communication networks.

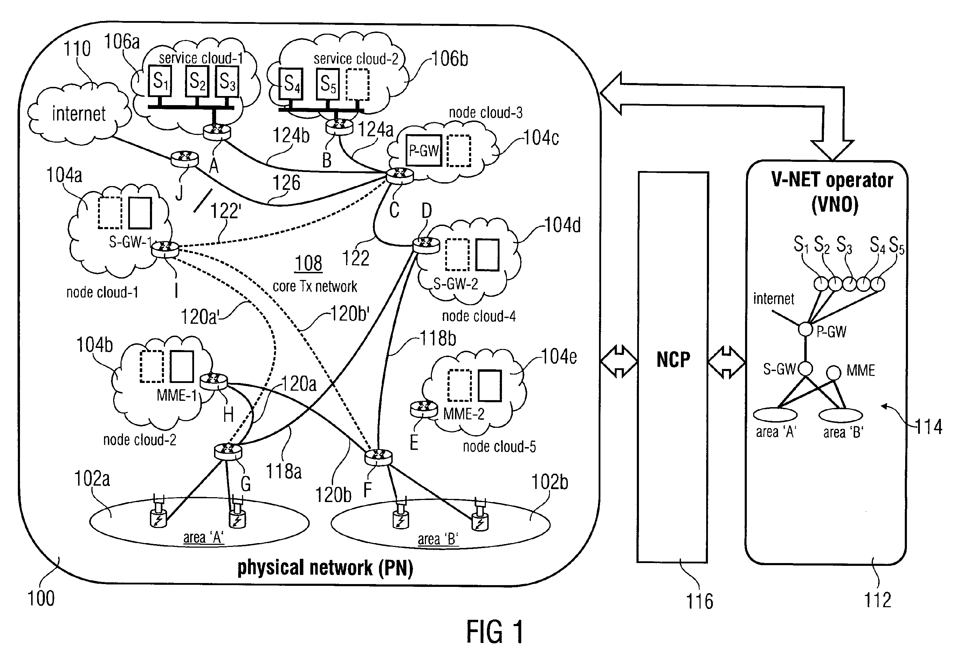

Fig. 1 shows an exemplary representation of how a virtual network operator provides its desired network topology that needs to be mapped to a physical network. Fig. 1 shows the physical network 100, in the depicted example a mobile communication network, including two radio access areas 102a and 102b (areas A and B) including one or more base stations BS serving one or more mobile users. The physical network 100 further comprises a plurality of node clouds 104a to 104e for implementing operations and management services. More specifically, each node cloud 104a to 104b provides one or more resources as shown by the boxes in the respective representations of the node clouds allowing for the implementation of desired operations and management services. For example, node clouds 104a and 104d may implement service gateways S-GW-1 and S-GW-2 for the mobile communication network implemented by the physical network 100. Node clouds 104b and 104e may implement mobile management entities MME-1 and MME-2, while node cloud 104c may implement the packet data network gateway P-GW. The physical network 100 may further comprise one or more services clouds, two of which are shown at 106a and 106b in Fig. 1. The services clouds 106a and 106b, like the node clouds 104a to 104e, provide resources, as schematically depicted by the boxes, for providing specific services. The network 100 further comprises a core transmission network 108 including a plurality of interfaces A to J for providing a connection to the respective node clouds, services clouds and areas. More specifically, interfaces A and B provide for a connection to the service clouds 106a to 106b, interfaces C, D and E provide for a communication to the node clouds 104c, 104d and 104e, interfaces F and J provide for a communication to the radio access areas 102a, 102b and interfaces H and I provide for a connection to the node clouds 104a and 104b. Further, by means of the interface J connection to the internet 110 is possible.

The physical network shown in Fig. 1 may be provided by a telecommunication provider and may be used by a virtual network operator 112 for implementing a specific topology desired by the virtual network operator for providing specific services to his customers. The virtual network operator 112 provides a network topology request as is schematically represented in Fig. 1 at 114. A network topology represents the respective services and operations to be provided by the virtual network operator to his customers. The virtual network operator desires to provide two radio access areas A and B both connected to a service gateway S-GW and to a mobile management entity MME. The virtual network represented by the topology 114 further includes a packet data network gateway P-GW connected to the service gateway S-GW. The packet data network gateway P-GW is further connected to the internet. In addition, five different services $S_1$ to $S_5$ are to be provided as is depicted schematically in Fig. 1. The virtual network operator generates a network topology request including the network topology 114 as depicted in Fig. 1 which, in addition, may include a link bandwidth BW, a delay and a node/site capability or resource requirement, for example the number of nodes or the number of CPU cores that are needed for implementing the desired services to be provided by the virtual network operator via its virtual net. As is depicted in Fig. 1, a network configuration platform 116 is provided which receives the network topology request from the virtual network operator 112. The network configuration platform 116 has information about the physical network 100 and knows what it looks like. The network configuration platform 116 will map the VNO network topology request onto the PN 100 in a way as depicted in Fig. 1. More specifically, the areas A and B of the network topology 114 are implemented by the radio access areas 102a and 102b. The service gateway S-GW is implemented by node cloud 104d including the necessary resources, thereby providing service gateway S-GW-2. The mobile management entity MME of the network topology network 114 is implemented by the node cloud 114b by the resources implementing MME-1. The packet data network gateway P-GW of the network topology 114 is implemented by the node cloud 104c, and the services $S_1$ to $S_5$ are implemented by the service clouds 106a and 106b, of which service cloud 106a implements services $S_1$ to $S_3$ and services cloud 106b implements services $S_4$ to $S_5$. By means of the core network 108 the necessary connections among the respective elements of the physical network are implemented, more specifically the areas A and B are connected to the service gateway via communication paths 118a and 118b. Further, the areas A and B are connected to the mobile management entity via communication paths 120a and 120b. The service gateway S-GW of the network topology 114 implemented by node cloud 104a is connected to the packet data network gateway P-GW implemented by node 104c via the communication path 122. The packet gateway is connected to the respective service clouds 106a and 106b via the communication paths 124a and 124b, and by means of the communication path 126 to the internet 110.

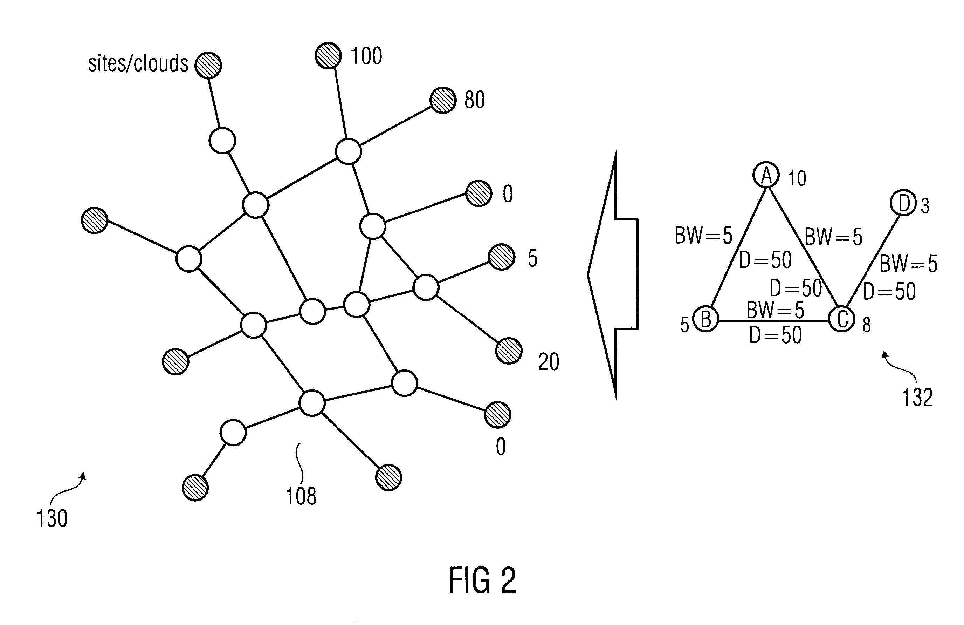

On the basis of Fig. 2 the mapping of a network topology provided by a virtual network operator to a physical network will be described in different terms using a simplified request. Fig. 2 shows a graphic representation of the physical network and the virtual network requested by the virtual network operator on the basis of respective graphs. A physical network graph 130 represents by the unfilled circles respective routers/switches of the core network 100 and by the lines connecting the circles respective internal communication paths/transmission links. In addition, connections from the internal switches/routers to external nodes (see the hatched circles) are shown, for example nodes implementing the node clouds, service clouds and radio access areas mentioned above with regard to Fig. 1. Further, on the right hand side of Fig. 2 a virtual network graph 132 is shown, which may be part of a virtual network operator request that includes five nodes A to D. The virtual network graph 132 indicates the resource requirements for each node, for example, node A requires ten resources, node B requires five resources, node C requires eight resource, and node D requires three resources. The resources may for example be the number of CPU cores or the like. Further, the virtual network graph 132 shows how the respective nodes A to D are to be connected with each other. Node A is connected to nodes B and C but not to node D which is only connected to node C. This connectivity is also included in the virtual network request together with the respective link bandwidth BW and delay requirements of the transmission links between the respective nodes A to D.

In the physical network graph 130 some of the nodes (see the hatched circles) external to the core network 108 are depicted with numbers associated therewith which indicate the number of available resources for this physical node in the physical network. On the basis of this information and on the basis of the characteristics of the transmission links or communication paths between the routers/switches in the core network 108 the virtual network as depicted by virtual network graph 132 can be mapped onto the physical network. The clouds shown in Fig. 1 may be abstracted as the hatched nodes shown in Fig. 2. Since the physical network topology and the virtual network operator requests are both represented as connected graphs 130, 132, a typical network embedding problem exists where a graph needs to be mapped onto another graph. The typical network embedding algorithm is NP-hard.

When implementing a virtual network as desired by a virtual network operator on the basis of a physical network in a way as described above with regard to Figs. 1 and 2, there may be situations where one or more of the nodes of the physical network fail. Such a situation will now be described with regard to Fig. 1. As can be seen from Fig. 1, by means of clouds 104a and 104e backup nodes for the service gateway and for the mobile management entity are provided by means of the service gateway S-GW-1 and by means of the mobile management entity MME-2. This is provided for allowing recovery from a node/site failure, for example, in case node 104d fails the communication paths 120a, 120b and 122 are "rerouted" as communication paths 120a', 120b' and 122' to the node cloud 104a implementing the backup service gateway S-GW-1. Thus, as far as the service gateway and the mobile management entity are concerned, the recovery of a single node failure is possible provided a backup node exists. However, in case the node cloud 104a also fails or the node cloud 104e fails in addition to a failure of the node clouds 104d and 104b, respectively, it will not be possible to recover from such a failure and the network will not operate. The same is true for any failure of the service cloud nodes or the node cloud 104c implementing the packet data network gateway.

Thus, while known solutions as described above with regard to Fig. 1 may provide for a recovery in case of one node/site failure at a time, they cannot provide for a recovery in case of more than one node/site failures at the same time. In the art, several approaches for allowing recovery of a one site failure at a time are known. The so called "N+1 protection" is suggested by Hongfang Yu et al. in "Survivable Virtual Infrastructure Mapping in Federated and Networking System under Single Regional Failure," Globecom 2010, and "Cost Efficient Design of Survivable Virtual Infrastructure to Recover from Facility Node Failures," ICC 2011. A further approach is described by Wai-Leong Yeow et al., "Designing and Embedding Reliable Virtual Infrastructures," Computer Communications Review, vol. 41-2, 2011. In a failure situation where one of the nodes in the physical failure 100 fails these approaches may allow for a recovery. However, no recovery will be possible if more than one node/site fails at the same time, i.e. simultaneous site failure recovery is not possible.

It is an object of the invention to provide an improved approach for mapping a network topology request to a physical network allowing for a recovery if multiple sites fail at the same time while avoiding unnecessary overhead.

This object is achieved by a method of claim 1, by a computer program product of claim 17, and a communication system of claim 18.

The present invention provides a method for mapping a network topology request to a physical network, the method comprising:

    (a) for each of a plurality of primary nodes included in the network topology request:

        (a.1) determining a plurality of nodes in the physical network that meet a primary resource requirement associated with the primary node, and
        (a.2) selecting from the nodes determined in step (a.1) one or more node pairs connected in the physical network by a path that meets a backup connection requirement for a connection between a primary node and its backup node; and

(b) determining the paths in the physical network between node pairs associated with interconnected primary nodes.

The present invention further provides a computer program product including instructions stored on a computer readable medium which, when running on a computer, executes the inventive method.

The present invention further provides a communication system comprising a physical network, and a network configuration platform coupled to the physical network and configured to receive a network topology request and to map the network topology request to the physical network in accordance with the inventive method.

In accordance with embodiments, the backup connection requirement includes a first parameter indicative of a predefined distance between the primary node and its backup node, and a second parameter indicative of a predefined constraint of the connection between the primary node and its backup node. Step (a.2) may further comprise selecting two nodes in the physical network as a node pair in case a path in the physical network between the two nodes meets the first and second parameters.

In accordance with embodiments, the first parameter comprises a delay for transmitting a signal between the primary node and its backup node, and wherein the second parameter comprises a bandwidth necessary between the primary node and its backup node, the bandwidth being the sum of the bandwidth associated with the links to/from the primary node.

In accordance with embodiments, step (b) comprises for all interconnected primary nodes determining the paths meeting a primary connection requirement between two node pairs associated with interconnected primary nodes. The primary connection requirement may comprise a first parameter and a second parameter, and step (b) may comprise:

(b.1) determining whether a path meets the first parameter:
(b.2) in case the path meets the first parameter, determining whether the path also meets the second parameter; and
(b.3) in case the path meets the first and second parameters, embedding the path.

In accordance with embodiments, the first parameter comprises a bandwidth between the interconnected primary nodes, and wherein the second parameter comprises a delay between the interconnected primary nodes.

In accordance with embodiments, in case in step (b) no path that meets the primary connection requirement can be found for a specific interconnected primary node pair, the method comprises:

(c) releasing a path previously determined in step (b) and at least partially overlapping a path connecting the specific interconnected primary node pair, in case the path connecting the specific interconnected primary node pair including the overlapping part meets the primary connection requirement.

In accordance with embodiments, step (c) may further comprise determining for the primary node pair interconnected by the release path a new path meeting the primary connection requirement. Step (c) may further comprise:

(c.1) selecting from the paths in the physical network between node pairs the path that meets a predefined constraint: and
(c.2) in case the selected path at least partly overlaps a previously determined path and releasing the previously determined path results in the selected path meeting the primary connection requirement, releasing the previously determined path, determining for the specific interconnected node pair a selected path, marking the overlapping part, and determining for the primary node pair interconnected by the release path a new path meeting the primary connection requirement.

In step (c.2), for determining the new path, the marked overlapping part may not be used.

In accordance with embodiments, the primary connection requirement comprises a desired bandwidth between the interconnected primary nodes and wherein in step (c.1)

- the predefined constraint comprises a delay, wherein the path with the smallest delay is selected, or
- the predetermined constraint comprises a distance, wherein the shortest path is selected, or
- the predetermined constraint comprises a number of overlapping links along the path, wherein the path with the minimum number of overlapping links is selected.

In accordance with embodiments, each of the plurality of primary nodes have associated therewith the same or different backup connection requirements.

In accordance with embodiments, the method may further comprise configuring the physical network in accordance with the selected node pairs and the determined path.

In accordance with embodiments, the network topology request specifies a communication network. The communication network may comprise a mobile communication network including one or more radio access areas and one or more nodes connected by a core network, the one or more nodes including a packet data network gateway, a serving gateway, a mobile management entity node or a service node.

In accordance with embodiments, the physical network of the communication system comprises a mobile communication network including one or more radio access areas, a plurality of nodes, and a core network connecting the one or more radio access areas and the plurality of nodes.

Thus, embodiments of the present invention provide a novel network embedding algorithm allowing for a recovery even in case of multiple simultaneous site failures with reduced overhead.

To avoid the problems of prior art approaches, and to allow for a full protection at a reduced computational overhead, in accordance with embodiments of the invention, first of all a node specified in the request and its backup node are determined. Then, from these nodes one or more node pairs that meet a specific backup connection requirement are selected, for example, in accordance with embodiments a desired distance or delay and a desired bandwidth in the connection. On the basis of these selected pairs, paths in the physical network between the node pairs associated with interconnected nodes are determined. Thus, in accordance with embodiments of the invention an approach is described indicating how a primary node and its backup node are determined in the physical network for one or more nodes in the virtual network request, and other than in the prior art, only the two nodes are determined on the basis of the backup connection requirements and then only the connection between the respective pairs is determined which reduces the overall computational overhead.

Further, embodiments of the invention provide for an approach determining paths within the network between the respective node pairs on the basis of a novel technique allowing to find a solution faster than conventional approaches.

Embodiments of the invention will now be described with reference to the accompanying drawings, in which:

Fig. 1    shows an exemplary representation for mapping a network topology from a virtual network operator to a physical network;

Fig. 2    shows a graphic representation of a physical network and a virtual network requested by the virtual network operator on the basis of respective network graphs;

Fig. 3    shows a schematic representation for implementing a 1+1 protection for all sites/nodes of a virtual network;

Fig. 4    shows a simplified example for obtaining full protection for a VNO request including only two nodes, wherein Fig. 4(a) shows a simplified VNO request, wherein Fig. 4(b) shows a full protection when applying a conventional approach, and wherein Fig. 4(c) shows full protection when applying an approach in accordance with embodiments of the invention;

Fig. 5    shows an example for a VNO request (nodes being indicated by capital letters) and for a physical network (nodes being indicated by small letters), wherein Fig. 5(a) shows the example of the virtual network graph of Fig. 2, and wherein Fig. 5(b) shows the physical network graph with its internal switches/routers, transmission links and external nodes; and

Fig. 6    shows a physical network graph used for describing the handling a situation in which a path cannot be found because the path search described with regard to Fig. 5 fails.

In the following, embodiments of the invention will be described. In accordance with the invention, an approach is taught that allows for a 1+1 protection for sites which are for example the sources of services for a network to be implemented on the basis of a virtual network operator's request.

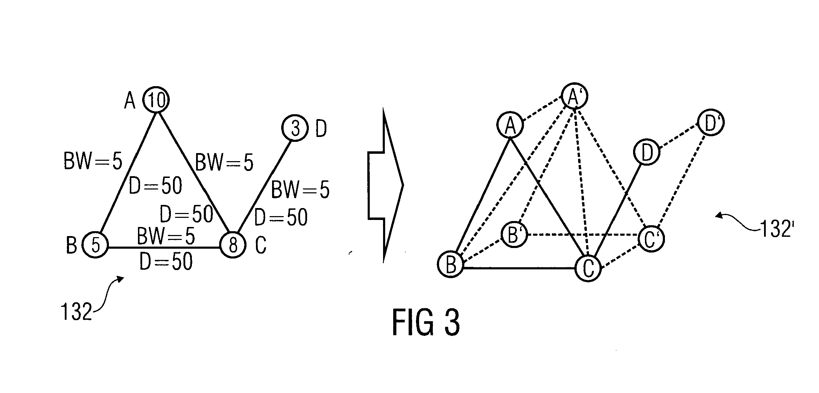

Fig. 3 shows a schematic representation for implementing a 1+1 protection for all sites/nodes of a virtual network. On the left hand side Fig. 3 shows the virtual network graph 132 already described above with regard to Fig. 2. On the right hand side of Fig. 3, a modified graph 132' is shown, the graph now implementing the respective nodes and connections which are required for allowing a recovery during multiple simultaneous site failures, i.e. for realizing a 1+1 protection for sites. As can be seen from network graph 132, each of the nodes A to D has a backup node A' to D'. Each of the backup nodes A' to D' needs to be connected to its primary node A to D so that in case of a failure the backup node can be informed accordingly to take over the functionality of the failed primary node. For each of the backup nodes those connections also implemented for the primary nodes need to be implemented, that is for the node A' also the connection to primary nodes B and C are needed as well as the connections to their respective backup nodes B' and C'. By implementing the modified network graph 132' it is possible to provide for a simultaneous multi-site/node protection.

This means that all nodes/sites in the VNO request 132 can be recovered. For every requested VNO node/site A to D backup nodes/sites A' to D' and links among the backup nodes/sites are to be found out to actually create the VNO request twice as is depicted at 132' in Fig. 3. In addition, the links between the primary and backup nodes/sites, the connection between the backup nodes/sites to all the nodes that are connected to its primary nodes/sites are required to support multi-site failure recovery. If node A fails and node A' takes over, the connections between A'-B and A'-C are necessary, and it is the same for all other backup nodes/sites; however, these additional connections are not all shown in the right hand part of Fig. 2, but are only shown for node A' to reduce the complexity of the figure.

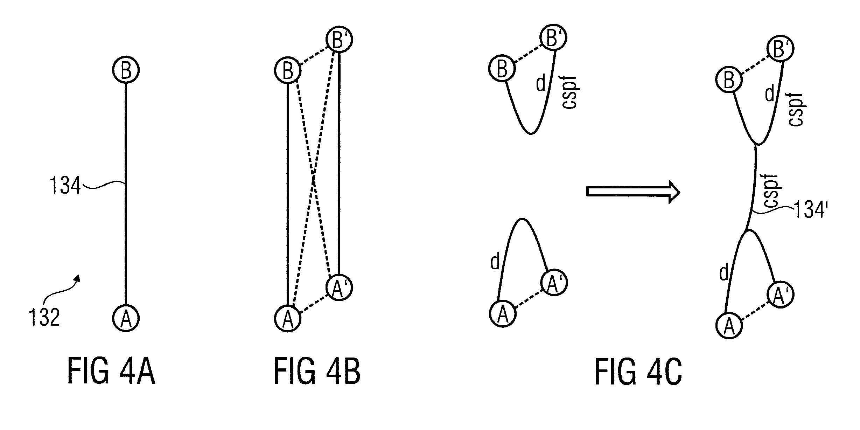

Fig. 4 shows a simplified example for obtaining full protection for a VNO request including only two nodes in accordance with a conventional approach and in accordance with an approach of embodiments of the invention. Fig. 4(a) shows a simplified VNO request, Fig. 4(b) shows a full protection when applying a conventional approach, and Fig. 4(c) shows full protection when applying an approach in accordance with embodiments of the invention.

In Fig. 4(a) the VNO request graph 132 of a VNO request is depicted. In the shown example, the VNO request includes a first node or site A and a second node or site B which are connected by a transmission link 134 having the requirements (e.g. bandwidth, delay) as explained above with regard to Fig. 3. When it is desired to provide for a full protection of the VNO request 132 including the two nodes A and B with the link 134 therebetween, and when applying a conventional technique like MILP/MCF, in the physical network, it is necessary to explicitly search for 2+2 = 4 nodes (two primary nodes and two backup nodes) and for six links to realize a 1+1 node/site protection, as it is depicted in Fig. 4(b). Thus, for implementing the VNO request of Fig. 4(a) providing full protection it is necessary to search in the physical node for the nodes A and B two backup nodes A' and B' and also six transmission links connecting each of the nodes and the backup nodes with each other. Clearly, this approach is disadvantageous as it requires a substantial overhead in computing and searching.

Therefore, embodiments of the invention provide for a novel approach that is described in further detail with regard to Fig. 4(c). Other than in the prior art approach described with regard to Fig. 4(b), in accordance with embodiments of the invention, first of all, in the physical network primary-backup pairs for every node in the virtual network operator request are determined. Thus, candidate nodes in the physical network are sorted out first. For example, there may be multiple nodes in the physical network which provide for the necessary resources for accommodating the virtual node A. Once these nodes have been determined (sorted out), the respective transmission links or paths between these nodes are determined and a parameter "d" is introduced in accordance with embodiments which represents a relationship between the primary node and its backup node. In other words, by means of the parameter "d" a requirement of the connection between the primary node and the backup node is determined. In accordance with embodiments, the parameter may indicate an acceptable delay for a communication between the primary node and the backup node. Fig. 4(c) depicts the above approach schematically. In accordance with embodiments described here, first of all from the physical nodes of the physical network (see for example Fig. 1) those nodes providing for the necessary requirements for implementing virtual network nodes A and B are selected. Among these nodes (the selected nodes) those fulfilling the parameter d are selected (see the left hand part of Fig. 4(c)). When searching for paths among the candidate nodes of A, a constraint-based shortest path first approach (CSPF-approach) may be used, and the constraint may be a bandwidth on the transmission link or path. In the example of considering the bandwidth as the constraint, the bandwidth necessary between the primary-backup node pair is the sum of bandwidths of all links from/to node A in the virtual network operator request. From the candidate nodes a primary-backup pair is selected if two nodes exist where the path between them has the necessary bandwidth and is short enough to meet the value of the parameter "d". In this way, first of all A-A' and B-B' is selected.

In the next step, in accordance with embodiments of the invention, one of the nodes from the selected pairs, i.e. one node for A-A' and one node from B-B' is selected, and the constraint-based shortest path first approach is applied with the constraint of the bandwidth value that is given by the VNO request and is associated with the link 134. If a path is found having the requested bandwidth or providing for the requested bandwidth, and if the length/delay of the path is below what the VNO request has asked for the connection 134 between A and B, the path is selected and the link A-B shown at 134' in the right hand part of Fig. 4(c) is embedded. If the shortest path does not satisfy the length/delay value, a longer path will also not satisfy this requirement.

Thus, an important aspect of embodiments of the invention for selecting primary and backup nodes and connecting them, is the provision of the distance "d" between the primary node and the backup node, wherein the distance may be a delay or a bandwidth associated with a transmission link in the physical network that needs to be met in accordance with the requirements defined by the virtual network operator, for example via the VNO request depicted in Fig. 4(a) indicating with regard to the nodes A and B this parameter. Once the respective pairs of primary backup nodes for each of the node in the VNO request are found, a path between two nodes from interconnected pairs of backup/primary nodes, in accordance with the VNO request, is determined. This may be done using conventional approaches or on the basis of a novel approach in accordance with embodiments of the invention. In accordance with this novel approach, the paths in the physical network are searched using the CSPF approach, wherein the constraint may be the bandwidth. In case a path determined also meets a delay requirement, it will be selected as a connection in the physical network between the one pair of backup/primary nodes and the other pair of backup and primary nodes.

When compared to the conventional approach described with regard to Fig. 4(b), the inventive approach is clearly advantageous as the overhead for determining the necessary nodes and transmission paths in the physical network for implementing a full protection is clearly reduced. While it is still necessary to find out four nodes for implementing the primary and backup nodes, it is no longer necessary to determine and evaluate each and every possible link between the nodes in the physical network that may implement the primary and backup nodes. Rather, first of all the connection in the physical network among the primary node and the backup node of the respective pairs is determined with regard to a distance parameter. Then, one of the nodes of each pair, for example node A and node B' shown in Fig. 4(c) are selected and a transmission path in the physical network between the two nodes implementing the virtual nodes A and B' are evaluated with regard to the specific transmission link criteria defined in the VNO request, and in case a link is found fulfilling this requirement it is selected as a connection between nodes A and B' (more specifically between the associated physical nodes in the physical network). Since the remaining nodes in the pairs, namely nodes B and A' have already associated therewith a connection to the other node in the pair fulfilling the respective distance requirement, it is no longer necessary to search for further connections as the connection found between A and B' will also satisfy any connection between A' and B' or A' and B.

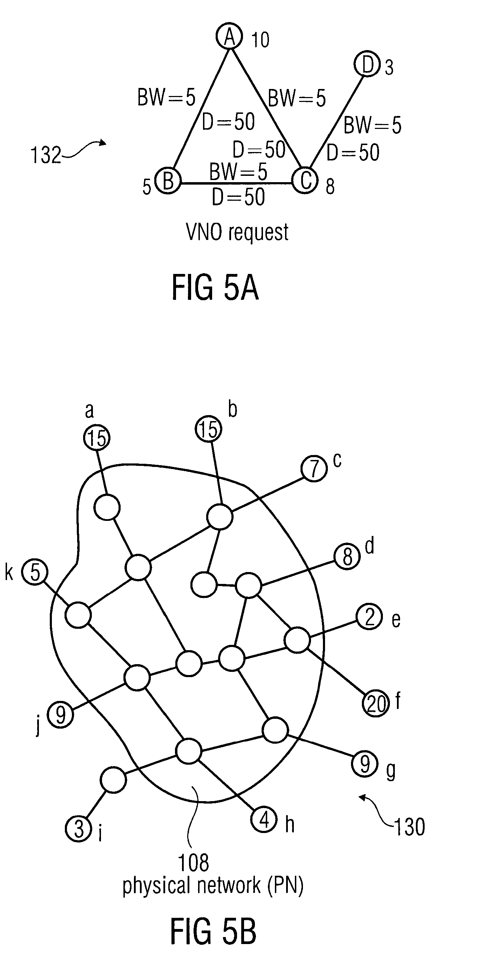

In the following, further embodiments of the invention will be described implementing the above described inventive approach for mapping a virtual network operator topology onto a physical network. Fig. 5 shows an example for a VNO request and for a physical network, more specifically Fig. 5(a) shows the example of the virtual network graph 132 described above with regard to Fig. 2, and Fig. 5(b) shows the physical network graph 130 with its internal switches/routers and transmission links and with its external nodes. More specifically,

Fig. 5(a) shows a VNO request 132 including four nodes A to D, of which node A is connected to nodes B and C and of which node D is only connected to node C. Node C is connected to all other nodes A, B and D. Each node has associated therewith a number indicating the resource requirements of the node, for example node A requires 10 resources, node B requires 5 resources, node C requires 8 resources, and node D requires 3 resources. Further, the respective links between the nodes are indicated by lines connecting the respective nodes and each line has associated therewith respective parameters indicating the required transmission link parameters, in the example all links require bandwidth of 5 and the delay on the respective links may be 50.

In Fig. 5(b) the core network 108 is schematically represented by the line around the non-filled circles which represent switches/routers of the core network 108. The lines connecting the switches/routers represent the transmission links within the core network 108. Further, nodes A to K are shown around the periphery of the core network 108 and connected to selected switches/routers which form the interface mentioned above with regard to Fig. 1, via respective transmission links. Each of the nodes A through K has associated therewith a number indicating the number of available resources at this node, for example the number of available CPU cores, servers or the like.

In accordance with the inventive approach, in a first step, on the basis of the VNO request 132, the nodes/sites indicated in the VNO request are sorted according to their resource demand, wherein this first step yields the following order of nodes from the VNO request 132:

$$A\ (10) > C\ (8) > B\ (5) > D\ (3)$$

In step 2, from the physical nodes A through K of the physical network shown in Fig. 5(b) candidate nodes are found for implementing nodes A, C, B and D as defined by the VNO request 132. More specifically, candidate nodes in the physical network are found for the VNO nodes/sites according to the VNO node resource requirement. From step 1, it is known that node A of the VNO request has the highest resource requirement, so the step 2 starts with node A. As can be seen from Fig. 5(b) of the physical nodes a to k the nodes a, b and f have sufficient resources (resource $\geq$ 10) to accommodate the requirements of node A. Thus, the candidate set for A is as follows:

$$Can.A(10) = \{a\ (15),\ b\ (15), f\ (20)\ \}$$

For determining from this candidate the physical node for implementing the primary node for node A from the VNO request and for implementing its backup node, the CSPF-approach is applied between the possible candidate node pairs with the constraint being the bandwidth, which is determined on the basis of the total bandwidth to/from node A in the VNO request. As can be seen from Fig. 5(a) the total bandwidth in/out of node A equals 10 (the bandwidth on link A-B and the bandwidth on the link A-C). Thus, in view of the two incident links the total bandwidth is 10. On the basis of the determined bandwidth demand of 10 the CSPF-approach is applied between the physical nodes a-b, a-f and b-f, i.e. between all possible connections among the nodes determined as candidate set for the VNO requested node A. In accordance with embodiments the parameter d is the delay for transmitting signals among the respective nodes of a pair which, in the embodiment described with regard to Fig. 5, is determined on the basis of the number of "hops". The number of hops is determined by the number of transmission links a signal needs to pass when traveling from a first physical node to another physical node through the physical core network 108, i.e. the number of transmission links between the cores and the internal switches/routers. In the embodiment of Fig. 5, it is assumed that the parameter d is set to be four our less, i.e. the criterion for making two nodes a primary node and a backup node of one of the nodes described by the VNO request is that the signal, at most, travels four links of the core network 108. Considering first of all nodes a and b, the number of hops is four. The number of hobs between node a and node f is at least six, and the number of hops between nodes d and f is at least five. Thus, under the assumption that all of the parts/transmission links between the switches/routers in the core network provide for a sufficient bandwidth which is at least 10 or more it is determined that the pairs a-f and b-f are not suitable as the lengths of a connection therebetween is greater than d = 4. Therefore, physical node pair a-b becomes the physical node pair for implementing node A and its backup in accordance with the VNO request shown in Fig. 5(a). Since node f is no longer a candidate for implementing node A, it is "released" and may be used as a node for a candidate set of the remaining VNO nodes B, C, D.

The above discussed step 2 is repeated for nodes C, B and D of the VNO request 132 in accordance with the order determined in step 1 so that step 2 for finding candidate nodes can be written as follows.

$$Can.A(10) = \{a\,(15),\, b\,(15),\, f\,(20)\,\} \; // \; BW=5+5=10$$
$$a <\!\!-\!\!> b <= 4$$
$$\rightarrow \text{select physical nodes a, b as node pair}$$

$$Can.C(8) = \{d\,(8),\, g\,(9),\, j\,(9)\} + \{f\,(20)\} \; // \; BW=15$$
$$d <\!\!-\!\!> g <= 4,\, d <\!\!-\!\!> f <= 4$$
$$\rightarrow \text{select physical nodes d, g and physical nodes d, f as node pairs}$$

$$Can.B(5) = \{c(7),\, k\,(5)\} + \{j\,(9)\} \; // \; BW=10$$
$$k <\!\!-\!\!> j <= 4,\, k <\!\!-\!\!> c <= 4$$
$$\rightarrow \text{select physical nodes j, k and physical nodes k, c as node pairs}$$

$$Can.D(3) = \{h\,(4),\, i(3)\} \; // \; BW=5$$
$$h <\!\!-\!\!> I <= 4$$
$$\rightarrow \text{select physical nodes h, i as node pair}$$

which yield the following possible PN node pairs in the physical network among nodes a to k for implementing the VNO nodes A to D specified in the VNO request 132:

$$Can_{pair}: \quad A = \{a,b\},\, C = \{(d,g),\, (d,f)\},\, B = \{(j,k),\, (k,\, c)\},\, D = \{h,i\}$$

Following the determination of the possible physical node pairs which are available for implementing the primary/backup nodes for the VNO requested nodes A to D, in accordance with invention in step 3 the paths among the PN candidate node pairs is determined to realize the network as requested by the virtual network operator. In other words, one needs to find out paths that will realize transmission links A-B, B-C, A-C and C-D as defined in the VNO request 132 and fulfilling the associated requirements, for example the bandwidth requirement and the delay requirement.

In accordance with one embodiment, step 3 for determining the paths among the PN candidate node pairs may use a conventional method, for example xILP may be applied to $Can_{pair}(A, B, C, D)$, but taking only one node from each pair. However, conventional approaches like the xILP/MCFP approach only optimize on the basis of one constraint, and further conventional integer linear programming techniques, like xILP or multi-commodity flow (MCF) approaches, take too long to find a solution so that in accordance with further embodiments of the present invention, instead of conventional approaches for determining a connection among the PN candidate node pairs in step 3, a different approach as described below may be used.

In accordance with an embodiment of the invention, in step 3 first of all the VNO node in the VNO request 132 is determined which has the most number of incident links which in the embodiment of Fig. 5(a) yields:

$$C > A = B > D$$

Thus, for step 3 node C from the VNO request is the primary candidate and it is necessary to find out in the core network 108 of the physical network a path for defining the transmission link C-A, C-B and C-D. From step 2 described above the physical network candidate nodes for virtual network node C are physical nodes d, f and g. For each available physical node pair for virtual node C one node is taken (any of the nodes is fine) and the CSPF-approach using the bandwidth as a constraint is applied for a connection from the taken node (d, f or g) to one of nodes a or b (associated with virtual node A), one of nodes c, k or j (possible nodes for node pairs associated with virtual node B), and one of nodes i or h (nodes for implementing the node pair of virtual node D). For example, the following links through the core network 108 are considered:

$$d \leftrightarrow a, d \leftrightarrow k, d \leftrightarrow h$$

Among the paths, it is determined whether there is one path that satisfies the bandwidth requirement and for this path it is determined whether it meets the delay requirement. If the delay requirement is not met, then no path can be found as in a situation where the shortest path is not satisfying the delay, any longer path even with enough bandwidth cannot satisfy the delay requirement. Embodiments for handling a situation where no path can be found will be described below. For the further discussion it is assumed that each of the above paths or links fulfills the bandwidth and the delay requirements. After having completed processing for virtual node C, step 3 proceeds with virtual node A or virtual node B, as both have the same number of incident links. For the further discussion it is assumed that virtual node A is considered. For virtual node A a link to virtual node B and to virtual node C exist, however, in the first iteration of step 3, for virtual node C respective paths to virtual node A, B and D have already been found so that now it is only necessary to determine a path between physical nodes implementing virtual node A and physical nodes implementing virtual node B. One of physical nodes a and b is selected, and a transmission path through the core network 108 to one of physical nodes j, k and to one of physical nodes k, c is evaluated with regard to its bandwidth and its delay requirement and it is determined, in the embodiment, that these requirements are fulfilled for the link between a and k.

Thus, for the virtual network operator request of Fig. 5(a) all links have been searched and found and since in the first iteration also the links from virtual node C to B and from virtual node C to D have been searched and found, it is not necessary to look for links from virtual node B and virtual node D.

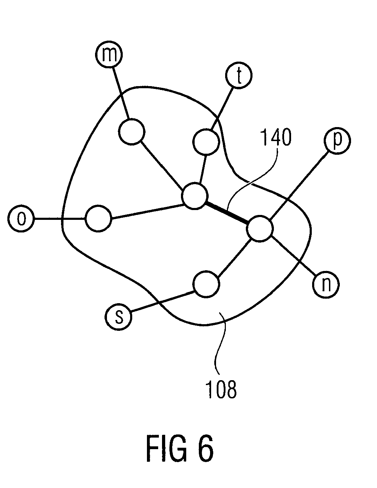

In the following, an embodiment will be described for handling a situation in which a path cannot be found because the above described path search fails. In accordance with embodiments, in case a path cannot be found, because there is not sufficient bandwidth available for connecting two physical nodes via the core network 108 for implementing a connection among virtual nodes in the virtual network operator, the following two approaches are possible. For the subsequent discussion a physical network graph as shown in Fig. 6 is assumed and it is further assumed that a path with enough bandwidth could not be found between physical nodes o and p.

In accordance with a first embodiment a robust approach is used in accordance with which first of all, all paths among the node shown in Fig. 6 are found out that meet the delay constraint. In Fig. 6 it is assumed that all paths among physical nodes m to t meet the delay constraint. In other words, all paths are found out fulfilling the delay constraint irrespective of the bandwidth constraint. The shortest path between o and p from the path just determined that meet the delay constraint is selected and it is determined whether it overlaps with any previously embedded paths. In the embodiment depicted in Fig. 6, path o-p overlaps partially with the previously embedded path m-n, see the transmission link 140. In case there is no overlapping part found with any previously embedded path, this means that there is no path available with enough bandwidth for the connection between o and p and in this case the method exits and indicates a failure.

In the situation depicted in Fig. 6, however an available part 140 of the path has been found and it is checked whether releasing the previously embedded path m-n provides enough bandwidth for the connection of the physical nodes o-p on the overlapping link/links, thereby fulfilling the bandwidth requirement. If not, the next shortest path is selected and the above steps are repeated. If enough bandwidth is released, the previously embedded connection m-n is released and the connection o-p is embedded instead. For "re-embedding" the connection m-n the approach returns to step 3 discussed above. However, when going back to step 3 the overlapping part 140 is marked for further reference, i.e. it cannot be used for "re-embedding" the connection m-n when re-executing step 3. Also, for repeating step 4 for other connections the overlapping part 140 is marked as not being available.

The above described approach is called the robust approach, however, in accordance with a second embodiment a greedy approach may also be applied which is just as the one described above, however, in the first step instead of finding out all paths that meet the delay constraint, in this approach only the shortest paths are found, and if the shortest one fails, the next shortest one is found out until all possible paths are exhausted. Thus, the two approaches differ from the starting point, in that the robust approach starts with the path having the minimum number of overlapping links, while in the greedy approach starts with the shortest approach.

In accordance with embodiments of the invention, prior art approaches are improved as multiple site failures at a time can be handled by mapping a virtual network topology on a physical network with increased efficiency and considering both delay and bandwidth. A networking system is provided, where an entity, called virtual network operator, provides a network topology he wishes to implement and passes it an entity called network configuration platform (see Fig. 1) which has the topological and resource information of a physical network, and the network configuration platform performs a mapping decision on how to embed the VNO requests onto the physical network ensuring all site protection. In accordance with embodiments, the mapping decision in the network configuration platform meets bandwidth and/or delay requirements from the virtual network operator. In accordance with embodiments, the mapping decision algorithm may consists of a step of finding out appropriate sites in the physical network to accommodate each virtual network operator requested site, a step finding out available paths between such sites that meet a predetermined bandwidth and delay requirement, and a step of making pairs of sites for each VNO requested site where a pair is a candidate for a primary site and a backup site for the VNO requested sites. The algorithm may further comprise the step of finding out a path meeting bandwidth requirements between two PN pair sites, which are candidates for two interconnected VNO requested sites, and repetition of this step until all paths of all interconnected VNO sites has been found in the physical network. The algorithm may further comprise steps for handling situations where paths cannot be found between two PN sites, for example a path meeting the bandwidth requirement. The previously found paths may be checked and in case a bandwidth taken by a previous path (previously embedded path) can be released to meet the present path's bandwidth requirement, and in case such a path was found, it is released.

Further, embodiments of the invention provide a network system where mapping decisions taken by a network configuration platform on the basis of the above described mapping decision algorithm are conveyed to physical network elements to reserve NCP directed resources and appropriate IDs to identify the physical networks and the resources for the particular virtual network operator request.

Physical network elements may comprise computers, routers, site management systems and the like. NCP directed resources, for example resources defined by the VNO network requests, may comprise CPU cycles/cores, memory elements, virtual machines, transmission bandwidths, data forwarding priority and the like. The IDs may comprise IP addresses, tunnel IDs and the like.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A method for mapping a network topology request (132) to a physical network (130), the method comprising:

    (a) for each of a plurality of primary nodes (A-D) included in the network topology request (132):

        (a.1) determining a plurality of nodes (a-k) in the physical network (130) that meet a primary resource requirement associated with the primary node, and
        (a.2) selecting from the nodes (a-k) determined in step (a.1) one or more node pairs connected in the physical network (130) by a path that meets a backup connection requirement for a connection between a primary node and its backup node; and

    (b) determining the paths in the physical network (130) between node pairs associated with interconnected primary nodes (A-D).

2. The method of claim 1, wherein the backup connection requirement includes a first parameter indicative of a predefined distance between the primary node and its backup node, and a second parameter indicative of a predefined constraint of the connection between the primary node and its backup node.

3. The method of claim 2, wherein step (a.2) comprises:

    selecting two nodes (a-k) in the physical network (130) as a node pair in case a path in the physical network (130) between the two nodes (a-k) meets the first and second parameters.

4. The method of claim 2 or 3, wherein the first parameter comprises a delay for transmitting a signal between the primary node and its backup node, and wherein the second parameter comprises a bandwidth necessary between the primary node and its backup node, the bandwidth being the sum of the bandwidth associated with the links to/from the primary node.

5. The method of one of claims 1 to 4, wherein step (b) comprises for all interconnected primary nodes (A-D):

    determining the paths meeting a primary connection requirement between two node pairs associated with interconnected primary nodes (A-D).

6. The method of claim 5, wherein the primary connection requirement comprises a first parameter and a second parameter, and wherein step (b) comprises:

>  (b.1) determining whether a path meets the first parameter:
>  (b.2) in case the path meets the first parameter, determining whether the path also meets the second parameter; and
>  (b.3) in case the path meets the first and second parameters, embedding the path.

7. The method of claim 5 or 6, wherein the first parameter comprises a bandwidth between the interconnected primary nodes (A-D), and wherein the second parameter comprises a delay between the interconnected primary nodes (A-D).

8. The method of one of claims 1 to 7, wherein, in case in step (b) no path that meets the primary connection requirement can be found for a specific interconnected primary node pair, the method comprises:

>  (c) releasing a path previously determined in step (b) and at least partially overlapping a path connecting the specific interconnected primary node pair, in case the path connecting the specific interconnected primary node pair including the overlapping part meets the primary connection requirement.

9. The method of claim 8, wherein step (c) further comprises:

>  determining for the primary node pair interconnected by the release path a new path meeting the primary connection requirement.

10. The method of claim 8 or 9, wherein step (c) comprises:

>  (c.1) selecting from the paths in the physical network (130) between node pairs the path that meets a predefined constraint: and
>  (c.2) in case the selected path at least partly overlaps a previously determined path and releasing the previously determined path results in the selected path meeting the primary connection requirement, releasing the previously determined path, determining for the specific interconnected node pair a selected path, marking the overlapping part, and determining for the primary node pair interconnected by the release path a new path meeting the primary connection requirement.

11. The method of claim 10, wherein in step (c.2) for determining the new path, the marked overlapping part is not used.

12. The method of claim 10 or 11, wherein the primary connection requirement comprises a desired bandwidth between the interconnected primary nodes (A-D) and wherein in step (c.1)

>  - the predefined constraint comprises a delay, wherein the path with the smallest delay is selected, or
>  - the predetermined constraint comprises a distance, wherein the shortest path is selected, or
>  - the predetermined constraint comprises a number of overlapping links along the path, wherein the path with the minimum number of overlapping links is selected.

13. The method of one of claims 1 to 12, wherein each of the plurality of primary nodes (A-D) have associated therewith the same or different backup connection requirements.

14. The method of one of claims 1 to 13, further comprising:

>  configuring the physical network (130) in accordance with the selected node pairs and the determined path.

15. The method of one of claims 1 to 14, wherein the network topology request (132) specifies a communication network.

16. The method of claim 15, wherein the communication network comprises a mobile communication network including one or more radio access areas and one or more nodes (a-k) connected by a core network, the one or more nodes (a-k) including a packet data network gateway, a serving gateway, a mobile management entity node or a service node.

17. A computer program product including instructions stored on a computer readable medium which, when running on a computer, executes the method of one of claims one to 16.

**18.** A mobile communication system comprising:

a physical network (130); and
a network configuration platform coupled to the physical network (130) and configured to receive a network topology request (132) and to map the network topology request (132) to the physical network (130) in accordance with the method of one of claims 1 to 16.

**19.** The mobile communication system of claim 18, wherein the physical network (130) comprises a mobile communication network including one or more radio access areas, a plurality of nodes (a-k), and a core network connecting the one or more radio access areas and the plurality of nodes (a-k).


**Amended claims in accordance with Rule 137(2) EPC.**

**1.** A method for mapping a network topology request (132) to a physical network (130), wherein the network topology request (132) specifies a communication network, the method comprising:

(a) for each of a plurality of primary nodes (A-D) included in the network topology request (132):

(a.1) determining a plurality of nodes (a-k) in the physical network (130) that meet a primary resource requirement associated with the primary node, the primary resource requirement indicating the requirements for implementing a primary node in the physical network (130), and
(a.2) selecting from the nodes (a-k) determined in step (a.1) one or more node pairs connected in the physical network (130) by a path that meets a backup connection requirement for a connection between a primary node and its backup node, wherein the backup node is connected to its primary node so that in case of a failure of its primary node the backup node takes over the functionality of the failed primary node;

(b) determining, for two primary nodes (A-D) in the network topology request (132) to be connected, a path in the physical network (130) between one node from a node pair (A-A') selected for a first one of the primary nodes and one node from a node pair (B-B') selected for a second one of the primary nodes; and
(c) configuring the physical network (130) in accordance with the selected node pairs and the determined path.

**2.** The method of claim 1, wherein the backup connection requirement includes a first parameter indicative of a predefined distance between the primary node and its backup node, and a second parameter indicative of a predefined constraint of the connection between the primary node and its backup node.

**3.** The method of claim 2, wherein step (a.2) comprises:

selecting two nodes (a-k) in the physical network (130) as a node pair in case a path in the physical network (130) between the two nodes (a-k) meets the first and
second parameters.

**4.** The method of claim 2 or 3, wherein the first parameter comprises a delay for transmitting a signal between the primary node and its backup node, and wherein the second parameter comprises a bandwidth necessary between the primary node and its backup node, the bandwidth being the sum of the bandwidth associated with the links to/from the primary node.

**5.** The method of one of claims 1 to 4, wherein step (b) comprises for all interconnected primary nodes (A-D):

determining the paths meeting a primary connection requirement between two node pairs associated with interconnected primary nodes (A-D).

**6.** The method of claim 5, wherein the primary connection requirement comprises a first parameter and a second parameter, and wherein step (b) comprises:

(b.1) determining whether a path meets the first parameter:

(b.2) in case the path meets the first parameter, determining whether the path also meets the second parameter; and

(b.3) in case the path meets the first and second parameters, embedding the path.

**7.** The method of claim 5 or 6, wherein the first parameter comprises a bandwidth between the interconnected primary nodes (A-D), and wherein the second parameter comprises a delay between the interconnected primary nodes (A-D).

**8.** The method of one of claims 1 to 7, wherein, in case in step (b) no path that meets the primary connection requirement can be found for a specific interconnected primary node pair, the method comprises:

releasing a path previously determined in step (b) and at least partially overlapping a path connecting the specific interconnected primary node pair, in case the path connecting the specific interconnected primary node pair including the overlapping part meets the primary connection requirement.

**9.** The method of claim 8, wherein the step of releasing further comprises:

determining for the primary node pair interconnected by the release path a new path meeting the primary connection requirement.

**10.** The method of claim 8 or 9, wherein the step of releasing comprises:

(i) selecting from the paths in the physical network (130) between node pairs the path that meets a predefined constraint: and

(ii) in case the selected path at least partly overlaps a previously determined path and releasing the previously determined path results in the selected path meeting the primary connection requirement, releasing the previously determined path, determining for the specific interconnected node pair a selected path, marking the overlapping part, and determining for the primary node pair interconnected by the release path a new path meeting the primary connection requirement.

**11.** The method of claim 10, wherein in step (ii) for determining the new path, the marked overlapping part is not used.

**12.** The method of claim 10 or 11, wherein the primary connection requirement comprises a desired bandwidth between the interconnected primary nodes (A-D) and wherein in step (i)

- the predefined constraint comprises a delay, wherein the path with the smallest delay is selected, or
- the predetermined constraint comprises a distance, wherein the shortest path is selected, or
- the predetermined constraint comprises a number of overlapping links along the path, wherein the path with the minimum number of overlapping links is selected.

**13.** The method of one of claims 1 to 12, wherein each of the plurality of primary nodes (A-D) have associated therewith the same or different backup connection requirements.

**14.** The method of one of claims 1 to 13, wherein the communication network comprises a mobile communication network including one or more radio access areas and one or more nodes (a-k) connected by a core network, the one or more nodes (a-k) including a packet data network gateway, a serving gateway, a mobile management entity node or a service node.

**15.** A computer program product including instructions stored on a computer readable medium which, when running on a computer, executes the method of one of claims 1 to 14.

**16.** A mobile communication system comprising:

a physical network (130); and

a network configuration platform coupled to the physical network (130) and configured to receive a network topology request (132) and to map the network topology request (132) to the physical network (130) in accordance with the method of one of claims 1 to 14.

**17.** The mobile communication system of claim 16, wherein the physical network (130) comprises a mobile communication network including one or more radio access areas, a plurality of nodes (a-k), and a core network connecting the one or more radio access areas and the plurality of nodes (a-k).

FIG 1

EP 2 713 556 A1

FIG 2

EP 2 713 556 A1

FIG 3

EP 2 713 556 A1

FIG 4C

FIG 4B

FIG 4A

VNO request

FIG 5A

108
physical network (PN)

FIG 5B

FIG 6

Europäisches
Patentamt

European
Patent Office

Office européen
des brevets

**EUROPEAN SEARCH REPORT**

Application Number

EP 12 18 6582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | HONGFANG YU, ET AL.: "Cost Efficient Design of Survivable Virtual Infrastructure to Recover from Facility Node Failures", ICC 2011 - 2011 IEEE INTERNATIONAL CONFERENCE ON COMMUNICATIONS, 5 June 2011 (2011-06-05), XP031908369, * the whole document * | 1-18 | INV. H04L12/24 H04L12/70 |
| A,D | WAI-LEONG YEOW ET AL.: "Designing and Embedding Reliable Virtual Infrastructures", COMPUTER COMMUNICATIONS REVIEW, vol. 41-2, 2011, XP002691404, * the whole document * | 1-18 | |

TECHNICAL FIELDS
SEARCHED (IPC)

H04L

The present search report has been drawn up for all claims

| Place of search | Date of completion of the search | Examiner |
|---|---|---|
| The Hague | 31 January 2013 | Aura Marcos, F |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WAI-LEONG YEOW et al.** Designing and Embedding Reliable Virtual Infrastructures. *Computer Communications Review,* 2011, vol. 41-2